(19) **Europäisches Patentamt**
**European Patent Office**
**Office européen des brevets**

(11) **EP 4 685 666 A1**

(12) **EUROPEAN PATENT APPLICATION**

(43) Date of publication:
28.01.2026 Bulletin 2026/05

(21) Application number: 24190088.5

(22) Date of filing: 22.07.2024

(51) International Patent Classification (IPC):
*G06F 16/3329* (2025.01)   *G06F 16/3332* (2025.01)

(52) Cooperative Patent Classification (CPC):
G06F 16/33295; G06F 16/3338

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Decker, Thomas**
**85716 Unterschleißheim (DE)**
• **Büttner, Florian**
**60316 Frankfurt (DE)**
• **Köbler, Alexander**
**90461 Nürnberg (DE)**

(74) Representative: **Siemens Patent Attorneys**
**Postfach 22 16 34**
**80506 München (DE)**

(54) **PROVIDING RELIABILITY OPTIMIZED OUTPUT OF A RETRIEVAL-AUGMENTED GENERATION SYSTEM**

(57)    Providing reliability optimized output of a retrieval-augmented generation system

Computer-implemented method for providing reliability-optimized output of a retrieval-augmented generation (RAG) system in an industrial application in reply to an input query (q), the RAG system (20) comprising a retrieval module (21), an augmentation module (22) and a generation module (23), comprising the steps:

a) receiving (S1), by an evaluation module (24), a set (D) of documents determined by the retrieval module (21) depending on the input query (q), and an output (OPp) of the generator module (23) generated for a prompt (PRMT), wherein the prompt (PRMT) is generated by the augmentation module (22) by combining the input query (q) and the set (D) of documents,

b) determining (S2), by the evaluation module (24), an importance value $\phi_i$ for each individual document (Di) in the set (D) of documents quantifying an importance of the individual document in relation to a quality value Q of the output (OPp) of the generator module (23) for the set (D) of documents,

c) optimizing (S3) the retrieval module (21) and the augmentation module (22) with an ordered subset (S) of the set (D) of documents having a highest partial quality value (Qp) as observed during the determination of the importance value $\phi_i$ of each individual document (Di), and

d) providing (S4) the output (QPf) of the generation module (23) predicted for an optimized prompt generated by the optimized augmentation module (22) combining the input query (q) with the subset (S) of documents with the highest partial quality value (Qp) for the input query (q) to a user interface.

FIG 3

## Description

## Field of the Invention

The present disclosure relates to a computer-implemented method for providing reliability-optimized output of a retrieval-augmented generation (RAG) system in an industrial application in reply to an input query, a system performing the method as well as a respective computer program product.

## Background

Generative artificial intelligence (generative AI) is artificial intelligence capable of generating text, images, videos, or other data using generative models in response to prompts. Generative AI models learn the patterns and structure of their input training data and then generate new data that has similar characteristics. Generative AI and in particular Large Language Models (LLMs) have demonstrated remarkable capabilities in creating relevant outputs to address user queries.

However, current frameworks are rather complicated and opaque systems that are prone to produce unreliable output if users prompt the generative model to generate content that diverges from the training data. A known approach to partially overcome such limitations is Retrieval-Augmented-Generation (RAG) where powerful generative models are combined with additional information obtained from a trustworthy knowledge base.

For industrial applications using generative AI for supporting monitoring, operation or maintenance of a machine, vehicle, building or power facilities, the output in response to a query needs to be reliable and explainable to get trust into the responses. In addition, emerging legislation, such as the recently developed EU AI-Act, might require such kinds of systems to ensure a sufficient level of transparency when applied in critical applications.

Further, applying RAG-based GenAI solutions in existing, i.e., brownfield environments is often faced with a body of disorganized documents. For the task at hand, some of the documents might be highly beneficial whereas others might actually harm the performance of the overall system, e.g., because they are flawed, outdated, or are not aligned with the system/application the GenAI is embedded in. Such issues cannot be detected by current solutions. However, only a manual filtering and organizing step guarantees high-quality document input. Thus, establishing a reliable RAG system is often laborious and requires significant domain expertise.

Therefore, it is an object of the present invention to improve the quality of an output of a generative AI system or more specific of a retrieval-augmented generation-based system especially when used in industrial application. It is another object to shorten adaption time and optimize output quality of a RAG-based system to a new application environment. It is another object to enhance transparency and explainability of the RAG system in industrial-grade applications.

## Brief Summary of the Invention

This object is solved by the features of the independent claims. The dependent claims contain further embodiment of the invention.

A first aspect concerns a computer-implemented method for providing reliability-optimized output of a retrieval-augmented generation (RAG) system in an industrial application in reply to an input query, the RAG system comprising a retrieval module, an augmentation module and a generation module, comprising the steps:

a) receiving, by an evaluation module,

a set D of documents determined by the retrieval module depending on the input query, and an output of the generator module generated for a prompt, wherein the prompt is generated by the augmentation module by combining the input query and the set of documents,

b) determining, by the evaluation module, an importance value $\phi_i$ for each individual document Di in the set D of documents quantifying an importance of the individual document in relation to a quality value Q of the output of the generator module for the set D of documents,

c) optimizing the retrieval module and the augmentation module with an ordered subset S of the set D of documents having a highest partial quality value Qp as observed during the determination of the importance value $\phi_i$ of each individual document Di, and

d) providing the output of the generation module predicted for an optimized prompt generated by the optimized augmentation module combining the input query with the subset of documents with the highest partial quality value Qp for the input query to a user interface.

Advantageously, the presented invention not only ensures that the quality of the generated output is improved, but further increases the transparency of the RAG system in general. He proposed method facilitate preprocessing step and help integrate systems such as the Industrial Copilot in brownfield environments with a preexisting but unorganized body of documentation. When applying the RAG system in new and even more existing brownfield environments, the method facilitates a preprocessing step by integrating preexisting but unorganized documentation.

In an embodiment of the method comprises a further step e) of controlling a production facility or a vehicle or a building facility or a facility in a power grid using the predicted output.

Advantageously, the controlling task is reliably executed due to the improved predicted output of the optimized retrieval module and augmentation module.

In an embodiment the quality value Q is determined by any of lexical similarity, a kernel entropy or asking a generative model itself whether the generated answer is correct (p(True)) for the generation module having any kind of generative model.

In an embodiment the quality value Q is determined by any of predictive entropy, an output perplexity, an out-of-distribution-related scores or a semantic entropy for the generation module having an open generative model providing access to a predictive distribution of the generative model.

Advantageously, these methods for determining the quality value are known and can be applied without extensive adaptation effort. This reduces costs and time for optimizing the RAG system.

In an embodiment the quality value Q is determined by a semantic similarity between at least one ground truth query-output-pair and the generated answer, preferably input via the user interface.

This allows to integrate domain knowledge via the user interface into the system and adapt it to the task at hand.

In an embodiment the importance value $\phi_i$ is a Shapley value with respect to the quality value Q.

While Shapley values are computationally demanding in general, the proposed method can be performed at this stage rather efficiently despite working with LLMs since typically only a low number of k relevant documents is retrieved.

In an embodiment the importance values $\phi_i$ of documents in the ordered subset S of the set of documents having the highest importance value and/or the sequence of documents in the ordered subset used in the optimized prompt is provided to the user interface.

Advantageously, the importance values $\phi_i$ of documents in the ordered subset S provides a document-level relevance indicator increasing the transparency based on which information the output has been created by generation module 24.

In an embodiment the output of the generation module predicted for all ordered subsets S of the set of documents and the respective partial quality value Q(S) determined for the ordered subset during performance of step b) is logged.

This logging provides information which ordered document combination gives the most reliable result when added as context to the prompt. This information provides transparency of the generated prompt and thus on the documents which influenced most the output of the generation module.

In an embodiment the steps a) and b) are performed with more than one set of documents and step c) and d) is performed with the ordered subset of documents having the highest partial importance value of all the sets of documents.

As multiple sets of documents are retrieved and entered into the evaluation module, results can subsequently be aggregated to ensure that the optimal context is identified for generating the most reliable output.

In an embodiment steps b) and c) are performed more than one time, i.e., each time the quality value Q is determined by a different method and performing step c) and d) with the subset of documents having the highest partial quality value Q.

I.e., step c) is performed for each of the methods used for Q and in the end when all outcomes for different Q methods are combined to the ordered subset S with the highest partial quality value q as average over all considered Q methods.

In an embodiment the retrieval module, especially an embedding step in the retrieval module is optimized by applying the importance value $\phi_i$ of the ordered subset S of the set D of documents having the highest partial quality value Q for given prompt as a task-dependent similarity measure.

More specifically, generating combined embedding of different documents Di out of the set D of documents having similar importance values $\phi_i$, across different input queries.

Thus, the best document configuration in terms of selection and sequence of individual documents is used as a corrective signal to fine-tune the retrieval module such that it better works next time.

In an embodiment each of the receiver module, the augmentation module and the generative module comprise a machine learning model, preferably a generative model, especially a large language model.

A second aspect concerns a System comprising at least one processor configured to form retrieval-augmented generation (RAG) system comprising a retrieval module, an augmentation module, a generation module and an evaluation module, configured to perform following steps:

a) receiving, by an evaluation module,

a set D of documents determined by the retrieval module depending on the input query, and

an output of the generator module generated for a prompt, wherein the prompt is generated by the augmentation module by combining the input query and the set of documents,

b) determining, by the evaluation module, an importance value $\phi_i$ for each individual document Di in the set D of documents quantifying an importance of the individual document in relation to a quality value Q of the output of the generator module for the set D of documents,

c) optimizing the retrieval module and augmentation module with an ordered subset S of the set D of documents having a highest partial quality value Q as observed during the determination of the impor-

tance value $\phi_i$ of each individual document Di, and
d) providing the output of the generation module predicted for an optimized prompt generated by the optimized augmentation module combining the input query with the subset of documents with the highest partial quality value Qp for the input query to a user interface.

A third aspect concerns a computer program product directly loadable into an internal memory of at least one digital computer, comprising software code portions for performing the above-mentioned steps when said product is run on said at least one digital computer.

**Brief description of the drawings**

The invention will be explained in more detail by reference to accompanying figures. Similar objects will be marked by the same reference signs.

Figure 1    schematically illustrates a known Retrieval-Augmented Generation (RAG) system.

Figure 2    shows an embodiment of the inventive method illustrated by a flow chart.

Figure 3    schematically illustrates an embodiment of the inventive method performed by an embodiment of the inventive system.

Figure 4    schematically illustrates an application scenario of an embodiment of the inventive system.

Throughout this document the expressions Retrieval-Augmented Generation System is named RAG system. RAG system and RAG-based system are used synonymously and are directed to a RAG system which is either applied as a stand-alone application in an industrial environment or which is combined with further modules into an application or device used in an industrial environment to control, monitor or operate facilities or devices in this environment. The phrase "model" is used as a short cut for a machine learning model.

It is noted that in the following detailed description of embodiments, the accompanying drawings are only schematic, and the illustrated elements are not necessarily shown to scale. Rather, the drawings are intended to illustrate functions and the co-operation of components. Here, it is to be understood that any connection or coupling of functional units, modules, components or other physical or functional elements could also be implemented by a direct connection or an indirect connection coupling element, e.g., via one or more intermediate elements. A connection or a coupling of entities or components can for example be implemented by a wire-based, a wireless connection and/or a combination of a wire-based and a wireless connection. Functional modules can be implemented by dedicated hardware, e.g., processor, firmware or by software, and/or by a combination of dedicated hardware and firmware and software. It is further noted that each functional modules described for an apparatus can perform a functional step of the related method and vice versa.

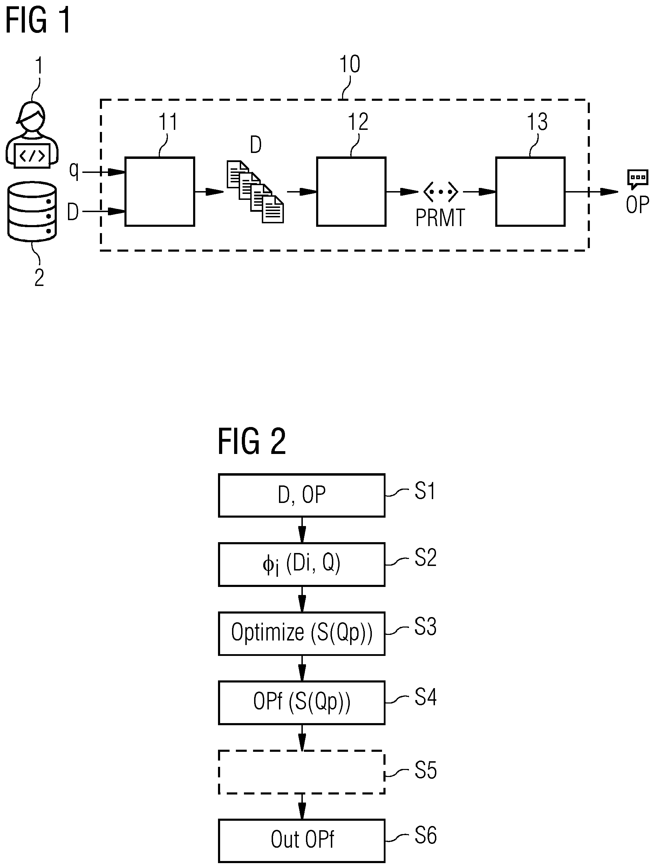

A typical system design of a RAG system 10 and its core components are depicted in Figure 1.

The RAG system 10 comprises a retrieval module 11, an augmentation module 12 and a generation module 13. The retrieval module 11 typically consists of an embedding model, that translates documents into numerical representation vectors, which are subsequently stored and indexed within a vector database. A document can refer to a complete file, a chunk of a file of a given size, or a semantically coherent portion of a bigger document. When a user 1 inputs a query q, the retrieval module 11 translates this query q into a numerical vector. The retrieval module 11 comprises a search algorithm used to identify best matching entries in the database 2 based on a similarity of their vector representations. Those documents D are ranked according to their relevance and forwarded to the augmentation module 12.

The augmentation module 12 typically provides the obtained documents D as additional context to the user query q forming a prompt PRMT as input to the generation module 13. The generation module 13 processes the prompt PRMT and provides an output OP in response to the query q.

Since the size of the context is typically limited and the order in which the information appears is important for the final result, there also exist approaches where additional context summarization or document reranking is performed. The generation module 13 is typically a pretrained generative Large Language Model such as GPT4 or LLAMA2. Such generative models produce a textual output OP given a text-based input prompt q where the generative model iteratively predicts the next word (or rather sub-word component) until the user query is sufficiently addressed.

However, such techniques are typically independent of the generation module 13 and are therefore prone to be suboptimal. Gautier Izacard, Patrick Lewis, Maria Lomeli, Lucas Hosseini, Fabio Petroni, Timo Schick, Jane Dwivedi-Yu, Armand Joulin, Sebastian Riedel, and Edouard Grave propose in "Few-shot learning with retrieval augmented language models" published by arXiv preprint arXiv:2208.03299, 2022 to leverage the change in output perplexity when ablating individual documents during augmentation for fine-tuning the retriever.

However, this does not account for the crucial fact that also the order matters in which the documents are provided to the generation module 13 and does not improve the augmentation process.

The proposed method improves RAG systems by introducing a novel explanation module into the design which is depicted in a flow chart in Figure 2 and described

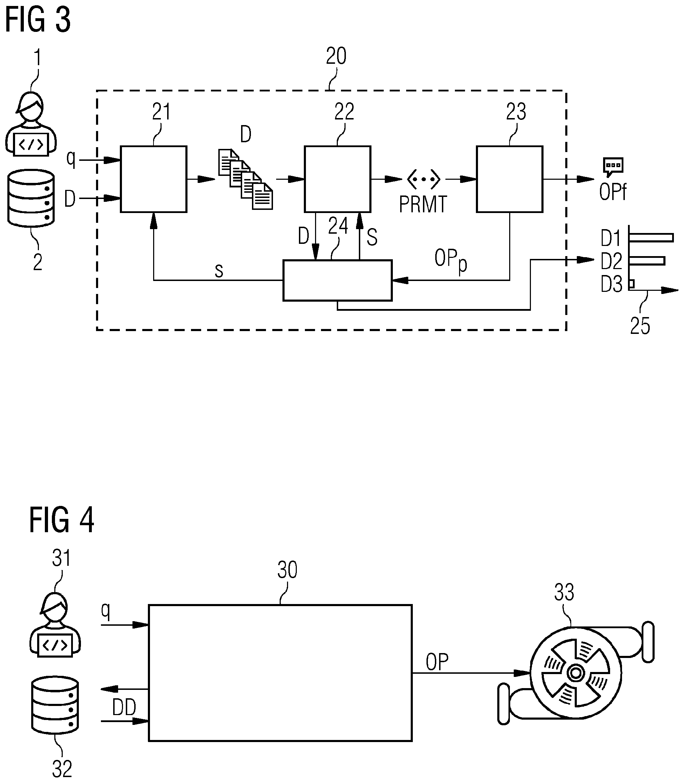

The proposed computer-implemented method provides a reliability-optimized output OPf in reply to an input query of a retrieval-augmented generation (RAG) system applied in an industrial environment, e.g., as a stand-alone tool or integrated into an industrial application. The respective enhanced RAG system 20, see Fig.3, further boosts the reliability of RAG systems in industrial applications by integrating a novel explanation module 24 into the typical RAG design pattern that interacts with existing components, i.e., retrieval module 21, augmentation module 23 and generation module 23 in a distinguishable way. This not only ensures that the quality of the generated output is improved, but further increases transparency of the RAG system in general.

The generative module comprise a generative model, especially a large language model. The receiver module and the augmentation module can also comprise additional machine learning models, including generative models. Optionally, the retrieval of document by the retrieval module can be performed using classical search algorithms like term frequency-inverse document frequency TF-IDF or Okapi Best matching 25, in short BM25.

In a first step S1 of the method, a set D of documents are received in the explanation module 24. The set D of documents are determined by the retrieval module 21 depending on the input query q. In addition, an output OPp is received in the explanation module 21 which was generated by the generator module 24 for a prompt PRMTp. The prompt PRMTp is generated by the augmentation module 22 by combining the input query q and the set D of documents.

An importance value $\phi_i$, is determined for each individual document Di in the set D of documents by the evaluation module quantifying an importance of the individual document in relation to a quality value Q of the output OPp of the generator module 23 for the set D of documents, see S2. The importance value $\phi_i$ of the individual document Di is calculated considering ordered subsets S of the set D of documents. In the end the importance value $\phi_i$ is an importance for every single retrieved document Di. Thus, for each individual document D1, ... Dk of the retrieved set D of documents an importance value $\phi_i$,..., $\phi_k$ is determined and each of the importance values $\phi_i$,..., $\phi_k$ describes the actual importance of this individual document Di,..., Dk on the output OPp of the generation module 23.

Next, see step S3, the retrieval module 21 and the augmentation module 22 are optimized with an ordered subset S of the set D of documents having a highest partial quality value Qp as observed during the determination of the importance value $\phi_i$ of each individual document Di. The partial quality value Qp is a byproduct of determining the importance value $\phi_i$,..., $\phi_k$, because all subsets S of the set D of documents D put into different orders are considered in the process of determining the importance values $\phi_i$,..., $\phi_k$.

In step S4, the output OPf of the generation module 23 predicted for an optimized prompt which is generated by the optimized augmentation module 23 combining the input query q with the subset S of documents with the highest partial quality value Qp for the input query is provided to a user interface. Optionally, a production facility or a vehicle or a building facility or a facility in a power grid is controlled, monitored or operated using the predicted output OPf, see S5. Optionally, the importance values $\phi_i$ of documents in the ordered subset S of the set D of documents having the highest importance value and/or the sequence of documents in the ordered subset used in the optimized prompt is provided to the user interface.

In the following an embodiment of the method is described being performed by the extended RAG system 20 illustrated in Fig.3.

Given a set D of k relevant documents D1,..., Dk, the evaluation module 24 of the enhanced RAG system 20 quantifies the importance of each document for the output OPp created by the generation module 24 via Shapley Values. The Shapley value provides a principled way to explain the predictions of nonlinear models common in the field of machine learning. By interpreting a model trained on a set of features as a value function on a coalition of players, Shapley values provide a natural way to compute which features contribute to a prediction. Shapley Values are a popular tool in game theory and Explainable AI to understand how different inputs have contributed to a final outcome.

To apply this concept an output-related quantity of interest, i.e., the quality value Q, that is able to capture the quality of the generated output within a single number. The quality value Q can be chosen to reflect the generative model implemented in the generation module 23 with respect to an access to a predictive distribution of the generative model. This ensures a wide practical applicability of the approach in many use cases. For generative models / LLMs which are provided as open source, or which allow full access to its predictive distribution.

Possible choices for use with open generative models are one of predictive entropy, output perplexity, out-of-distribution-related scores, as described by Liu, Weitang, et al. in "Energy-based out-of-distribution detection", Advances in neural information processing systems 33 (2020): 21464-21475, or semantic entropy as described by Kuhn, Lorenz, Yarin Gal, and Sebastian Farquhar in "Semantic uncertainty: Linguistic invariances for uncertainty estimation in natural language generation", arXiv preprint arXiv:2302.09664 (2023).

Possible choices for closed generative models, which provide access to outputs only, are for example lexical similarity as described by Fomicheva, Marina, et al. in "Unsupervised quality estimation for neural machine translation." Transactions of the Association for Computational Linguistics 8 (2020): 539-555, or kernel entropy as described by Gruber, Sebastian G., and Florian Buettner in "A Bias-Variance-Covariance Decomposition of Kernel Scores for Generative Models." arXiv preprint arXiv:2310.05833 (2023). Another choice for representing the quantity of interest, i.e., the quality value Q in closed systems is asking the model itself whether the generated answer is correct (p(True)) as described by Kadavath, Saurav, et al. "Language models (mostly) know what they know." arXiv preprint arXiv:2207.05221 (2022).

In rare instances where there are ground truth query-output-pairs available, e.g., generated by a domain expert, the semantic similarity between those and the generated answer could also be used as a quantity of interest Q. Such domain knowledge is integrated into the RAG system 20, e.g., via the user interface, and allows to adapt the system to the task at hand.

Mathematically, the Shapley Value of document Di, denoted by $\phi_i$, for output quantity Q is defined as the weighted average of its marginal contributions over all possible document subsets S and rankings, denoted by

$$\phi_i = \sum_{S \subseteq D} \frac{1}{\binom{k-1}{|S|} k} (Q(S \cup \{i\}) - Q(S))$$

It is worth noting that the computation of $\phi_i$ only requires access to the generative model, i.e., LLM indirectly via the quality value Q and thus inherits the requirements from Q.

While Shapley values are computationally demanding in general, the described approach can be performed at this stage rather efficiently despite working with LLMs since typically only a low number of k relevant documents D1,..., Dk is retrieved. The method is also substantially more efficient than a joint training of retriever and LLM as proposed, e.g., by Gautier Izacard, Patrick Lewis, Maria Lomeli, Lucas Hosseini, Fabio Petroni, Timo Schick, Jane Dwivedi-Yu, Armand Joulin, Sebastian Riedel, and Edouard Grave in "Few-shot learning with retrieval augmented language models", arXiv preprint arXiv:2208.03299, 2022.

During the computation of the importance values $\phi_i$ the output of all document subsets and rankings Q(S), is logged and stored, e.g., in an internal memory or database. More precisely, the output OPp of the generation module 23 predicted for all ordered subsets S of the set D of documents and the respective partial quality value Qp(S) determined for this ordered subset is logged during determination of the importance values $\phi_i,...,\phi_k$. Therefore, it is known which ordered document combination S gives the most reliable output OPf when added as context to the prompt PRMT.

Optionally the steps described so far are repeated by retrieving multiple sets of relevant documents using different retrieval configuration of the retrieval module 21 or the augmentation configurations of the augmentation module 22 as well as varying quantities of interest, i.e., varying the quality value Q for computing the Shapley Values. In more detail, step b) and c) is performed more than one time each time the quality value Q is determined by a different method according to claim 4 and/or claim 5 and performing step d) with the subset of documents the highest partial quality value Qp. All results can subsequently be aggregated to ensure that we really identified the optimal context for the most reliable output.

The best document configuration, i.e., ordered subset S of documents providing the highest partial quality value Qp, is used as a corrective signal to fine-tune the retrieval model in the retrieval module 21 such that it better works next time. More specifically, information about the importance of particular set D of documents for given prompts can be considered as a task-dependent similarity measure to improve the embedding step of the retrieval module 21, for instance by generating a combined embedding of documents that share similar importance across different queries. The best document configuration, i.e., ordered subset S of documents, is also forwarded to the augmentation module 22 to design the final context as part of the augmentation module that is fed together with the original query q to the generation module 23. In other words, a combined embedding of different documents Di out of the set D of documents is generated having similar importance values $\phi_i$ across different input queries.

As final output the Shapley Values of the best working document combination and order that have been used as context is communicated to the user 1. More specific, the importance values $\phi_i$ of documents in the ordered subset S of the set D of documents having the highest importance value and/or the sequence of documents in the ordered subset used in the optimized prompt is provided to the user interface. This document-level relevance indicator increases the transparency based on which information the output has been created by generator G. This enables better debugging of inappropriate outputs and helps to better comply with regulatory requirements regarding AI transparency.

Applying a state-of-the-art type RAG-based GenAI solution as shown in Fig. 1 in a brownfield environments is often faced with a multitude of disorganized documents stored in a databease 32. For the task at hand, some of the documents might be highly beneficial whereas others might actually harm the performance of the overall system, e.g., because they are flawed, outdated, or are not aligned with the system the GenAI is embedded in. Such issues cannot be detected by current RAG-based systems. However, a manual filtering and organizing step guarantees only high-quality document input and, thus, a reliable system is often laborious and requires significant domain expertise.

Fig. 4 shows an embodiment of the described enhanced RAG system 30 applied in an industrial environment for monitoring, controlling or operating a facility 33, here, e.g., a machine. The facility can also be one of a production facility or a vehicle or a building facility or a facility in a power grid.

An operator of the machine 33 may input a query q to the RAG system 30, e.g., providing a new setting to adapt the machine to a changed tool of the machine or to a different temperature range. The RAG system 30 retrieves an initial set of documents DD from the database 32 and automatically determines the most adequate subset of documents providing the highest partial quality value Qp. The RAG system automatically optimizes its retrieval and augmentation module to the new environment. This optimization can be performed by iteratively retrieving different sets of documents related to the query q. The optimized output OP is output and transferred to the machine 33 to activate the provided settings.

The proposed method and RAG system significantly facilitate the widespread use of LLMs in domain-specific applications with varying quality in the available documentation. This directly translates to numerous settings. By integrating the additional explanation module and its interconnections with the typical RAG components, the method leverages Explainable AI techniques in a novel way to improve the system at several stages in the generation process. This unique extension not only contributes to more reliable outputs but also increases system transparency in general, which further helps to better comply with legal requirements.

It is to be understood that the above description of examples is intended to be illustrative and that the illustrated components are susceptible to various modifications. For example, the illustrated concepts could be applied for different technical systems and especially for different sub-types of the respective technical system with only minor adaptions.

**Claims**

1. Computer-implemented method for providing reliability-optimized output of a retrieval-augmented generation (RAG) system in an industrial application in reply to an input query (q), the RAG system (20) comprising a retrieval module (21), an augmentation module (22) and a generation module (23), comprising the steps:

   a) receiving (S1), by an evaluation module (24),

   a set (D) of documents determined by the retrieval module (21) depending on the input query (q), and
   an output (OPp) of the generator module (23) generated for a prompt (PRMT), wherein the prompt (PRMT) is generated by the augmentation module (22) by combining the input query (q) and the set (D) of documents,

   b) determining (S2), by the evaluation module (24), an importance value $\phi_i$ for each individual

document (Di) in the set (D) of documents quantifying an importance of the individual document in relation to a quality value Q of the output (OPp) of the generator module (23) for the set (D) of documents,
   c) optimizing (S3) the retrieval module (21) and the augmentation module (22) with an ordered subset (S) of the set (D) of documents having a highest partial quality value (Qp) as observed during the determination of the importance value $\phi\_i$ of each individual document (Di), and
   d) providing (S4) the output (QPf) of the generation module (23) predicted for an optimized prompt generated by the optimized augmentation module (22) combining the input query (q) with the subset (S) of documents with the highest partial quality value (Qp) for the input query (q) to a user interface.

2. Computer-implemented method according to claim 1, comprising a further step e. controlling (S5) a production facility or a vehicle or a building facility or a facility in a power grid using the predicted output (QP).

3. Computer-implemented method according to any of the preceding claims, wherein the quality value (Q) is determined by any of a lexical similarity, a kernel entropy or asking a generative model itself whether the generated answer is correct (p(True)) for the generation module (23) having any kind of generative model.

4. Computer-implemented method according to any of the preceding claims, wherein the quality value Q is determined by any of a predictive entropy, an output perplexity, an out-of-distribution-related scores or a semantic entropy for the generation module having an open generative model providing access to a predictive distribution of the generative model.

5. Computer-implemented method according to any of claims 3 or 4, wherein the quality value Q is determined by a semantic similarity between at least one ground truth query-output-pair and the generated answer, preferably input via the user interface.

6. Computer-implemented method according to any of the preceding claims, wherein the importance value $\phi_i$ is a Shapley value with respect to the quality value Q.

7. Computer-implemented method according to any of the preceding claims, wherein the importance values $\phi_i$ of documents in the ordered subset (S) of the set (D) of documents having the highest importance value and/or the sequence of documents in the ordered subset (S) used in the optimized prompt is provided to the user interface.

8. Computer-implemented method according to any of the preceding claims, wherein logging the output (QPfj of the generation module (23) predicted for all ordered subsets (S) of the set (D) of documents and the respective partial quality value Qp(S) determined for the ordered subset during performance of step b).

9. Computer-implemented method according to any of the preceding claims, wherein the steps a) and b) are performed with more than one set (D) of documents and step c) and d) is performed with the ordered subset (S) of documents having the highest partial importance value of all the sets (D) of documents.

10. Computer-implemented method according to any of the preceding claims, wherein step b) and c) is performed more than one time each time the quality value Q is determined by a different method according to claim 4 and/or claim 5 and performing step d) with the subset of documents the highest partial quality value Qp.

11. Computer-implemented method according to any of the preceding claims, wherein the retrieval module (21), especially an embedding step in the retrieval module (21) is optimized by applying the importance value $\phi_i$ of the ordered subset (S) of the set (D) of documents having the highest partial quality value Qp for given prompt as a task-dependent similarity measure.

12. Computer-implemented method according to claim 11, wherein generating a combined embedding of different documents (Di) out of the set (D) of documents having similar importance values $\phi_i$ across different input queries.

13. Computer-implemented method according to any of the preceding claims, wherein the receiver module (21), the augmentation module (22) and the generative module (23) comprise a machine learning model, preferably a generative model, especially a large language model.

14. System comprising at least one processor configured to form retrieval-augmented generation (RAG) system (20) comprising a retrieval module (21), an augmentation module (22), a generation module (23) and an evaluation module (24), configured to perform following steps:

   a) receiving (S1), by an evaluation module (24),

      a set (D) of documents determined by the retrieval module (21) depending on the input query (q), and
an output (OPp) of the generator module (23) generated for a prompt (PRMT), wherein the prompt (PRMT) is generated by the augmentation module (22) by combining the input query (q) and the set (D) of documents,

   b) determining (S2), by the evaluation module (24), an importance value $\phi_i$ for each individual document (Di) in the set (D) of documents quantifying an importance of the individual document in relation to a quality value Q of the output (OPp) of the generator module (23) for the set (D) of documents,
   c) optimizing (S3) the retrieval module (21) and the augmentation module (22) with an ordered subset (S) of the set (D) of documents having a highest partial quality value (Qp) as observed during the determination of the importance value $\phi_i$ of each individual document (Di), and
   d) providing (S4) the output (QPfj of the generation module (23) predicted for an optimized prompt generated by the optimized augmentation module (22) combining the input query (q) with the subset (S) of documents with the highest partial quality value (Qp) for the input query (q) to a user interface.

15. Computer program product directly loadable into an internal memory of at least one digital computer, comprising software code portions for performing the steps of claims 1 and 13 when said product is run on said at least one digital computer.

FIG 1

FIG 2

FIG 3

FIG 4

Europäisches
Patentamt

European
Patent Office

Office européen
des brevets

# EUROPEAN SEARCH REPORT

**Application Number**

EP 24 19 0088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | I-HUNG HSU ET AL: "CaLM: Contrasting Large and Small Language Models to Verify Grounded Generation", ARXIV.ORG, CORNELL UNIVERSITY LIBRARY, 201 OLIN LIBRARY CORNELL UNIVERSITY ITHACA, NY 14853, 8 June 2024 (2024-06-08), XP091782384, * abstract * * 2 Problem Statement; page 2 * * 3.2 Contrasting Large and Small LMs for Automated Verification; page 3 * * 4 CaLM Framework; pages 4-6 * * figures 1, 3 * | 1-15 | INV. G06F16/3329 G06F16/3332 |
| X | YUN ZHU ET AL: "Accelerating Inference of Retrieval-Augmented Generation via Sparse Context Selection", ARXIV.ORG, CORNELL UNIVERSITY LIBRARY, 201 OLIN LIBRARY CORNELL UNIVERSITY ITHACA, NY 14853, 25 May 2024 (2024-05-25), XP091767811, * abstract * * 1 Introduction; pages 1-2 * | 1-15 | |
| X | DAYOON KO ET AL: "GrowOVER: How Can LLMs Adapt to Growing Real-World Knowledge?", ARXIV.ORG, CORNELL UNIVERSITY LIBRARY, 201 OLIN LIBRARY CORNELL UNIVERSITY ITHACA, NY 14853, 9 June 2024 (2024-06-09), XP091783206, * abstract * * page 2, left-hand column, paragraph 2 * * 4 Approach; pages 5-6 * * figures 1, 3 * | 1-15 | |

**TECHNICAL FIELDS SEARCHED (IPC)**

G06F

The present search report has been drawn up for all claims

| Place of search | Date of completion of the search | Examiner |
|---|---|---|
| The Hague | 6 January 2025 | Martínez Espuche, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **GAUTIER IZACARD ; PATRICK LEWIS ; MARIA LOMELI ; LUCAS HOSSEINI ; FABIO PETRONI ; TIMO SCHICK ; JANE DWIVEDI-YU ; ARMAND JOULIN ; SEBASTIAN RIEDEL ; EDOUARD GRAVE**. Few-shot learning with retrieval augmented language models. *arXiv preprint arXiv:2208.03299*, 2022
- **LIU ; WEITANG et al.** Energy-based out-of-distribution detection. *Advances in neural information processing systems*, 2020, vol. 33, 21464-21475
- **KUHN, LORENZ ; YARIN GAL ; SEBASTIAN FARQUHAR**. Semantic uncertainty: Linguistic invariances for uncertainty estimation in natural language generation. *arXiv preprint arXiv:2302.09664*, 2023
- **FOMICHEVA ; MARINA et al.** Unsupervised quality estimation for neural machine translation. *Transactions of the Association for Computational Linguistics*, 2020, vol. 8, 539-555
- **GRUBER ; SEBASTIAN G ; FLORIAN BUETTNER**. A Bias-Variance-Covariance Decomposition of Kernel Scores for Generative Models. *arXiv preprint arXiv:2310.05833*, 2023
- **KADAVATH ; SAURAV et al.** Language models (mostly) know what they know. *arXiv preprint arXiv:2207.05221*, 2022